# EUROPEAN PATENT SPECIFICATION

(11) **EP 3 863 730 B1**
(45) Date of publication and mention of the grant of the patent: **10.09.2025**
(21) Application number: 19871331.5
(22) Date of filing: 07.10.2019
(51) Int. Cl.: A62B 18/08, A62B 18/04, A62B 9/02, A62B 9/00, H04N 7/18, A62B 7/02

(54) **SCBA FACEMASK ASSEMBLY WITH ACCELEROMETER TO EXTEND BATTERY LIFE OF ELECTRICAL COMPONENTS**
SCBA-GESICHTSMASKENANORDNUNG MIT BESCHLEUNIGUNGSMESSER ZUR VERLÄNGERUNG DER BATTERIELEBENSDAUER ELEKTRISCHER KOMPONENTEN
ENSEMBLE MASQUE FACIAL SCBA AVEC ACCÉLÉROMÈTRE POUR PROLONGER LA DURÉE DE VIE DE LA BATTERIE DE COMPOSANTS ÉLECTRIQUES

(30) Priority: 12.10.2018 US 201862745154 P
(43) Date of publication of application: 18.08.2021
(73) Proprietor: 3M Innovative Properties Company, Saint Paul, Minnesota 55133-3427 (US)
(72) Inventor: THOMPSON, Darin K., Saint Paul, Minnesota 55133-3427 (US); DELAMER, Ivan M., Calgary, Alberta T3L 277 (CA)
(74) Representative: Mathys & Squire
(86) International application number: PCT/IB2019/058533
(87) International publication number: WO 2020/075045

(56) References cited:
- WO-A1-2016/090377
- WO-A1-2017/062709
- US-A1- 2010 300 436
- US-A1- 2015 121 684
- US-A1- 2015 121 684
- US-A1- 2015 217 143
- US-A1- 2015 217 143
- US-A1- 2017 312 556

## Description

### Background

The present invention relates generally to self-contained breathing apparatuses (SCBAs) and, more particularly, to an SCBA facemask assembly including electrical components that are selectively activated and de-activated to extend battery life.

SCBAs are devices used by, for example, first responders such as firefighters, law enforcement, military and other rescue and emergency workers, when operating in hazardous or dangerous environments, see for example WO 2016/090377 A1. An SCBA typically includes several primary components including a pressure air tank or cylinder, at least one pressure regulator, a facemask, and a carrying frame or support assembly to support the cylinder and related items on the back of a user. SCBAs continue to be an indispensable piece of equipment in a wide variety of situations and environments.

### Summary

There continues to be a need to improve the performance and use of self-contained breathing apparatus (SCBA) equipment and related accessories. In particular, there is an ongoing desire to incorporate additional functionality into SCBA equipment, such as electronic components and accessories, and to improve the reliability and maintenance of such electronics. The present disclosure provides a breathing apparatus, such as a self-contained breathing apparatus (SCBA) including, for example, a pressure air tank or cylinder, a pressure regulator, a facemask, and a carrying frame or support assembly that is worn by the user.

Portable or handheld electronic devices may include auto shutoffs that utilize timers and/or audio level sensors. Such approaches, however, are prone to function inconsistently depending on the environment.

Electronic components in SCBA facemasks may be maintained in an active or "on" mode and therefore fully operational even when they are not in use. Electronic components may include, for example, lights, alarms or alerts (e.g. sound and/or vibration), communication accessories (e.g. microphones, headphones, amplifiers), cameras and/or visual displays. Such electronic components may sit idle without being used for long periods of time, such as when the SCBA equipment is stored between uses. Electronic components in SCBA facemasks may include manual on/off buttons that are actuated by the user. For example, a facemask assembly may include a thermal camera with an on/off switch that is manually actuated by a user to turn the camera on and manually actuated by the user to turn the camera off. Depending on the circumstances, these tasks may need to be accomplished when the user is wearing bulky protective gloves, thereby limiting the dexterity of the user and making the task more difficult. In addition, the image display unit that creates and displays the thermal image captures by the camera may have its own separate on/off switch. Because the display and the on/off switch are typically located within the facemask assembly, the on/off switch is not readily accessible once the facemask assembly is donned by the user. That is, if the user dons the facemask assembly prior to turning on the display unit, the user would need to take the facemask assembly off in order to activate the display unit. In addition, after use, the user must remember to turn off both the thermal imaging camera and the display unit, otherwise these electronic components will remain active and operational even when not in use. Maintaining the electronic components in an active state will, of course, drain the battery, thereby resulting in frequent battery replacement. Frequent battery replacement can be tedious and inconvenient, results in additional cost, and produces waste.

According to claim 1, the present invention is directed to a facemask assembly with an integrated accelerometer for use in a self-contained breathing apparatus (SCBA). The facemask assembly uses the accelerometer to determine if the facemask assembly is moving, whereby the electronic components of the facemask assembly should be in an active or awake state, or if the facemask assembly is stationary (i.e. not moving, such as when the SCBA is being stored between uses), and the electronic components of the facemask assembly should be in a deactivated or dormant state. Accordingly, when the accelerometer detects a lack of movement, power delivery to the electronic components is suspended, thereby extending the life of the battery, and when the accelerometer detects motion, power is supplied to the electronic components so they are operational.

In a specific embodiment, the present disclosure provides a facemask assembly for a self-contained breathing apparatus wherein the facemask assembly comprises a facemask configured to be worn by a user; an electronic device, being a thermal imaging camera and/or in-mask display unit connected with the facemask, an accelerometer configured to detect motion of the facemask assembly; a microcontroller coupled with the accelerometer and configured to send signals to the electronic device in response to motion detected by the accelerometer; and a battery configured to supply power to the electronic device. When motion is detected by the accelerometer, a signal is transmitted to the microcontroller and the microcontroller interprets the signal to selectively adjust the power level supplied to the electronic device. For example, the microcontroller may send a signal to turn the electronic device on or off.

Advantages of certain embodiments of the SCBA facemask assembly described herein include eliminating the need to manually active and/or de-active electronic components associated with an SCBA facemask assembly, reducing the frequency with which batteries must be replaced, and reducing battery drain and thereby increasing battery life.

### Brief Description of the Drawings

FIG. 1 is a diagrammatic illustration of a SCBA according to an embodiment of the invention.
FIG. 2A is a perspective view of a thermal imaging camera for use in the SCBA of FIG. 1.
FIG. 2B is an exploded view of the thermal imaging camera of FIG 2A.
FIG. 3A is a perspective view of the in-mask display unit for use in the SCBA of FIG. 1.
FIG. 3B is an exploded view of the in-mask display of FIG 3A.

### Detailed Description

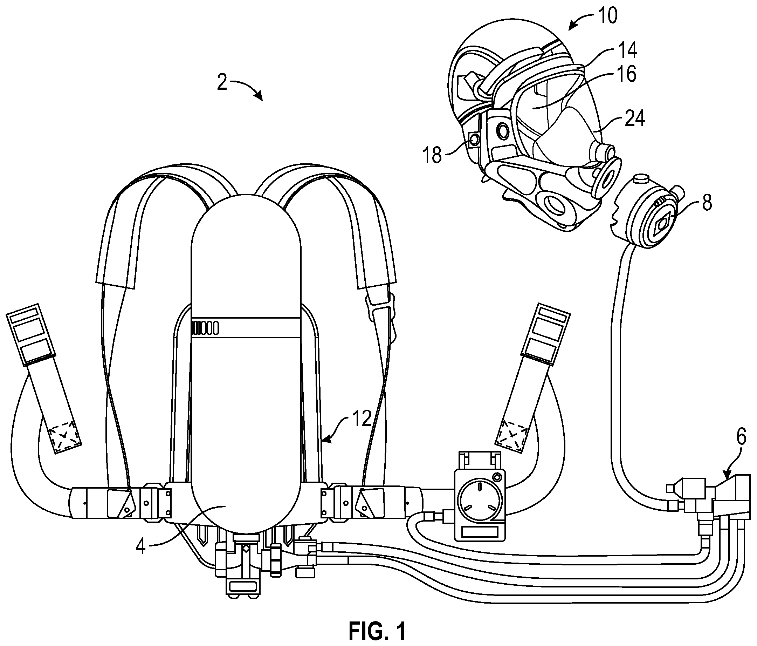

Referring now to the drawings, wherein like reference numerals refer to like or corresponding parts throughout the several views, FIG. 1 generally shows a self-contained breathing apparatus (SCBA) 2 including a pressure air tank or cylinder 4, a first pressure regulator 6, a second pressure regulator 8, a facemask assembly 10, and a carrying frame or support assembly 12 that is worn by the user.

The facemask assembly 10 includes a facemask 14 that is worn on the head and face of a user. When donned by the user, the facemask 14 defines an open interior region 16 adjacent the user's face. The facemask assembly 10 further includes at least one electronic component integrated with the facemask 14. Electronic components may include, for example, lights, haptic alerts or alarms, communication accessories, cameras and/or displays. In the illustrated embodiment, the facemask assembly 10 includes a thermal imaging camera 18 mounted on the side of the facemask 14. The facemask assembly 10 is further described in U.S. Patent Application No. 62/322,936.

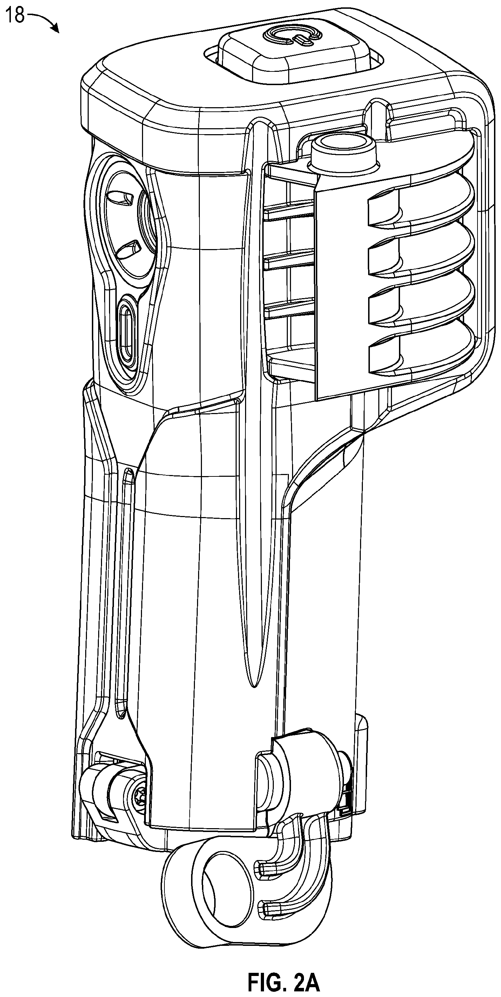

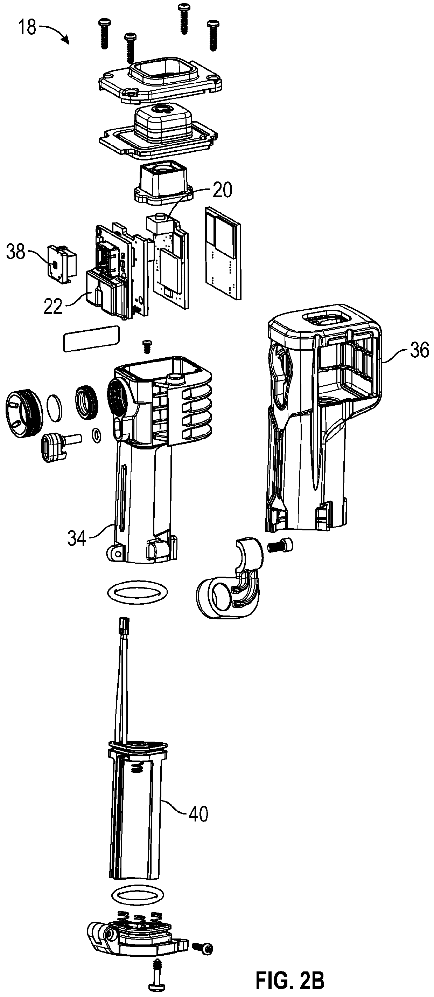

Referring to Figs. 2A and 2B, in accordance with one aspect of the facemask assembly 10, the thermal imaging camera 18 generally includes a main housing 34, a cover 36, a thermal imager camera core 38, an accelerometer 20, a microcontroller 22, and a battery 40. As described in more detail below, the accelerometer 20 is configured to detect motion and/or the orientation of the facemask assembly 10, and transmit data to the microcontroller. The microcontroller 22 is a printed circuit board that is coupled with the accelerometer 20. The microcontroller 22 is configured to interpret information from the accelerometer in the form of, for example, data or signals, and transmit signals to one or more electronic components. The accelerometer 20 and microcontroller 22 may communicate with each other via hardwired connection or via wireless connection. Likewise, the microcontroller 22 may be hardwired to the electronic components or communicate with the electronic components via wireless connection.

In the illustrated embodiment, the microcontroller 22 is configured to send signals to the thermal imaging camera 18 in response to motion detected by the accelerometer 20. It will be recognized that the microcontroller 22 may be configured to communicate with any electronic components incorporated into the facemask assembly 10, other devices or electronic components associated with the SCBA 2, or separate devices or equipment not associated with the facemask assembly 10 or SCBA 2.

The battery 40 is configured to supply the power needed to operate the thermal imaging camera 18. The particular battery is not significant to the invention hereof, so long as it provides sufficient power to operate the associated thermal imaging camera 18. Suitable batteries include a wide variety of commercially available household batteries such as disposable (e.g. alkaline, lithium) and rechargeable (e.g. nickel-metal hydride, nickel-zinc) batteries.

In operation, when motion is detected by the accelerometer 20, a signal (e.g. electrical or optical signal) is transmitted to the microcontroller 22, and the microcontroller 22 interprets the signal to selectively adjust the power level supplied to the electronic device. For example, in the illustrated embodiment, if the accelerometer 22 detects motion, the microcontroller 22 may send a signal to the thermal imaging camera 18 to turn on (i.e. activate) the thermal imaging camera 18. Alternatively, if the accelerometer 22 does not detect motion for a certain period of time, the microcontroller 22 sends a signal to the thermal imaging camera to turn off the thermal imaging camera 18 or have it operate in a reduced power state.

When the thermal imaging camera 18 is not active or operational and the microcontroller 22 is operating in a low power mode, the accelerometer 20 may try to detect the presence of motion once every k seconds. In one example, k may be 1 second meaning the accelerometer 10 will try to sense motion of the facemask assembly 10 once every second when the thermal imaging camera 18 is off or inactive. As long as no motion is detected, the microcontroller will continue to operate in a low power mode and the thermal imaging camera 18 will remain inactive. That is, if the facemask assembly 10 is stationary, then there is no reason to maintain the thermal imaging camera 18 in an enabled state. Thus, the microcontroller 22 causes the thermal imaging camera to be dormant, thereby saving battery power.

When the accelerometer 20 detects motion, the accelerometer 20 will wake up the microcontroller 22, whereby the microcontroller 22 will be able to transmit signals to the thermal imaging camera 18.

In one embodiment, the accelerometer 20 is configured to detect motion of the facemask assembly 10. Such motion may be due to, for example, motion generated by the user or motion generated by a vehicle. User generated motion may result, for example, from the user picking-up the facemask assembly 10 or from the user carrying or wearing the facemask assembly 10 and moving about (e.g. walking or running). Alternatively, vehicle generated motion of the facemask assembly 10 may be result from the facemask assembly 10 being transported in a vehicle. Because these situations may impact whether a particular electronic component should be activated, in a specific embodiment, the microcontroller 22 is configured to differentiate between motion created by the user and motion created by a vehicle transporting the facemask.

In another embodiment, the accelerometer 20 is configured to detect the orientation of the facemask assembly 10. That is, the accelerometer 20 is configured to detect whether the facemask assembly 10 is in a vertical or horizontal orientation. In this manner, the accelerometer is able to detect whether a user is upright or laying down, for example, on the ground or on a floor. In yet another embodiment, the accelerometer 20 and microcontroller 22 may be configured to detect blunt force impact. Such information can be transmitted to other personnel in the vicinity who can provide assistance, and/or to an incident commander who can request or deploy additional resources to address the situation.

The particular accelerometer 20 is not significant to the invention hereof, so long as it provides desired functions. In specific embodiment, the accelerometer 20 may be, for example, a piezo-electric and a piezo-resistive accelerometer.

In the illustrated embodiment, the facemask assembly 10 includes a thermal imaging camera arranged on the outside of the facemask. In addition, the facemask assembly 10 includes an in-mask display unit 24 located within the interior region 16 of the facemask assembly 10. The in-mask display unit 24 is configured to create and display an image from the data transmitted from the thermal imaging camera 18.

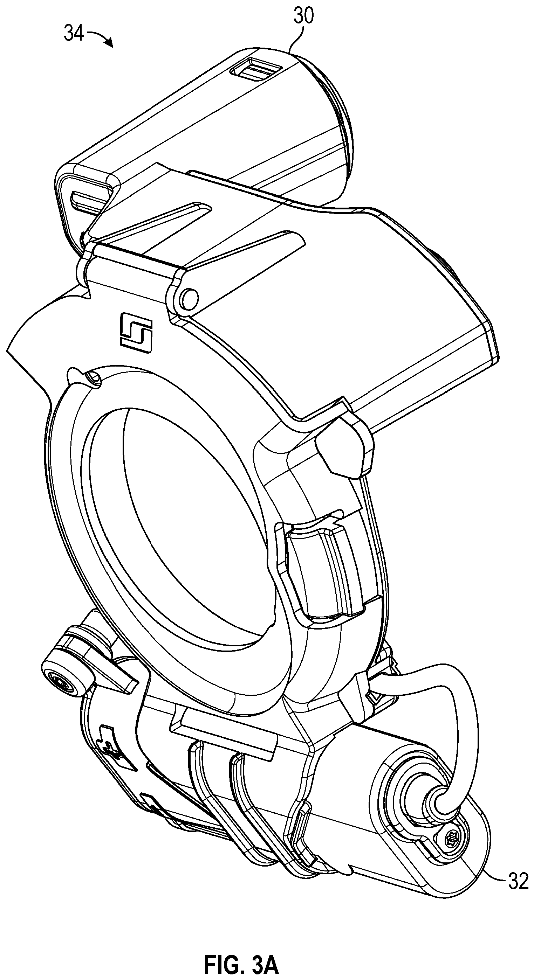

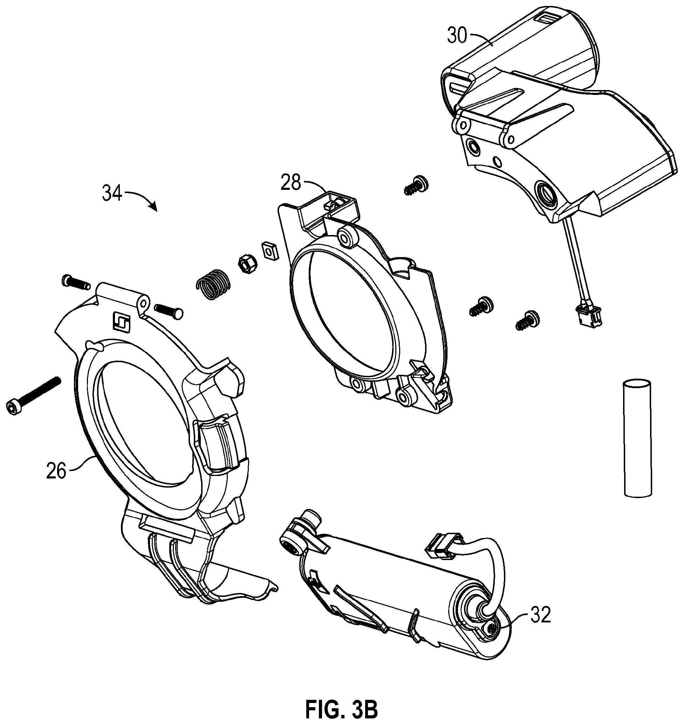

Referring to Figs. 3A and 3B, the in-mask display unit 24 includes a chassis 26, a chassis cover 28, a viewfinder 30 and a battery 32. The battery 32 is configured to supply the power needed to operate the in-mask display 24. The particular battery is not significant to the invention hereof, so long as it provides sufficient power to operate the associated in-mask display 24. Suitable batteries include a wide variety of commercially available household batteries such as disposable (e.g. alkaline, lithium) and rechargeable (e.g. nickel-metal hydride, nickel-zinc) batteries. The in-mask display 24 can communicate with the in-mask display via wired or wireless (e.g. Bluetooth) connection. Other aspects of the thermal imaging camera 18 and in-mask display 24 are described in WO2017/062709.

In one embodiment, the accelerometer 20 may be configured to provide image stabilization. In this manner, the accelerometer 20 may serve to cancel out unintended motion or reduce blur in the image displayed in the viewfinder of the in-mask display 24.

Persons of ordinary skill in the art may appreciate that various changes and modifications may be made to the invention described above without deviating from the inventive concept. Thus, the scope of the present invention should not be limited to the structures described in this application, but only by the structures described by the language of the claims.

## Claims

1. A self-contained breathing apparatus facemask assembly (10) comprising:
a. a facemask (14) configured to be worn by a user, the facemask defining an interior region (16) adjacent the user's face when the facemask is donned by the user;
b. an electronic device connected with the facemask;
c. an accelerometer configured to detect motion of the facemask ;
d. a microcontroller coupled with the accelerometer and configured to send signals to the electronic device in response to motion detected by the accelerometer; and
e. a battery configured to supply power to the electronic device;
wherein the self-contained breathing apparatus facemask assembly comprises a thermal imaging camera (18) as the electronic device, the thermal imaging camera (18) being mounted on the side of the facemask and including the accelerometer (20), the microcontroller (22) and the battery (40) as well as a thermal imager camera core (38);
wherein the accelerometer is configured to transmit information in the form of data or signals to the microcontroller and the microcontroller is configured to interpret said information from the accelerometer;
wherein when motion is detected by the accelerometer, the accelerometer is configured to transmit a signal, said signal being either an electrical signal or an optical signal, to the microcontroller and the microcontroller is configured to interpret the signal to selectively adjust the power level supplied to the thermal imaging camera in response to the sensed motion ;
wherein when no motion is detected by the accelerometer for a certain period of time, the microcontroller is configured to send a signal to the thermal imaging camera to either turn off the thermal imaging camera or have the thermal imaging camera operate in a reduced power state; and
wherein the facemask assembly further comprises a display unit (24) having a viewfinder arranged in the interior region (16) of the facemask assembly, the thermal imaging camera being configured to transmit data to the display unit and the display unit being configured to create and display an image from the data transmitted from the thermal imaging camera (18).

2. A self-contained breathing apparatus facemask assembly (10) as defined in claim 1, wherein the accelerometer (20) is configured to detect motion of the facemask assembly.

3. A self-contained breathing apparatus facemask assembly (10) as defined in claim 1, wherein the microcontroller (22) is configured to differentiate between motion of the facemask assembly created by motion of the user and motion created by a vehicle.

4. A self-contained breathing apparatus facemask assembly (10) as defined in claim 1, further wherein the accelerometer (20) is configured to detect the orientation of the facemask.

5. A self-contained breathing apparatus facemask assembly (10) as defined in claim 1, wherein the accelerometer (20) is configured to detect whether the facemask assembly is in a vertical or horizontal orientation.

6. A self-contained breathing apparatus facemask assembly (10) as defined in claim 1, wherein the accelerometer (20) and microcontroller (22) are configured to detect a blunt force impact.

7. A self-contained breathing apparatus facemask assembly (10) as defined in claim 1, wherein the accelerometer (20) is at least one of a piezo-electric and a piezo-resistive accelerometer.

8. A self-contained breathing apparatus facemask assembly (10) as defined in claim 1, wherein the facemask assembly further comprises at least one of a visual alert, an audible alert, a haptic alert and a communication accessory.

9. A self-contained breathing apparatus facemask assembly (10) as defined in claim 1, wherein the accelerometer (20) is configured to provide image stabilization.

10. A self-contained breathing apparatus facemask assembly (10) as defined in claim 1, wherein the facemask assembly further comprises a regulator (8).

11. A self-contained breathing apparatus (2) comprising the facemask assembly (10) of claim 1, wherein the self-contained breathing apparatus includes a pressure air tank or cylinder (4), a first pressure regulator (6), a second pressure regulator (8), and a support assembly (12).

## Patentansprüche

1. Eine Gesichtsmaskenanordnung (10) für ein umluftunabhängiges Atemgerät, die aufweist:
a. eine Gesichtsmaske (14), die konfiguriert ist, um von einem Benutzer getragen zu werden, wobei die Gesichtsmaske einen inneren Bereich (16) angrenzend an das Gesicht des Benutzers definiert, wenn die Gesichtsmaske von dem Benutzer angelegt wird;
b. eine elektronische Vorrichtung, die mit der Gesichtsmaske verbunden ist;
c. einen Beschleunigungsmesser, der die Bewegung der Gesichtsmaske detektiert;
d. eine Mikrosteuerung, die mit dem Beschleunigungsmesser gekoppelt und konfiguriert ist, um in Antwort auf eine Bewegung, die von dem Beschleunigungsmesser detektiert wird, Signale an die elektronische Vorrichtung zu senden; und
e. eine Batterie, die konfiguriert ist, um die elektronische Vorrichtung mit Leistung zu versorgen;
wobei die Gesichtsmaskenanordnung für ein umluftunabhängiges Atemgerät eine Wärmebildkamera (18) als elektronische Vorrichtung aufweist, wobei die Wärmebildkamera (18) an der Seite der Gesichtsmaske montiert ist und den Beschleunigungsmesser (20), die Mikrosteuerung (22) und die Batterie (40) sowie einen Wärmebildkamerakern (38) einschließt;
wobei der Beschleunigungsmesser konfiguriert ist, um Informationen in Form von Daten oder Signalen an die Mikrosteuerung zu übertragen, und die Mikrosteuerung konfiguriert ist, um die Informationen von dem Beschleunigungsmesser zu interpretieren;
wobei, wenn eine Bewegung von dem Beschleunigungsmesser detektiert wird, der Beschleunigungsmesser konfiguriert ist, um ein Signal, wobei das Signal entweder ein elektrisches oder ein optisches Signal ist, an die Mikrosteuerung zu übertragen, und die Mikrosteuerung konfiguriert ist, um das Signal zu interpretieren, um das Leistungsniveau, das der Wärmebildkamera zugeführt wird, in Antwort auf die erfasste Bewegung selektiv anzupassen;
wobei, wenn keine Bewegung von dem Beschleunigungsmesser für eine gewisse Zeitspanne detektiert wird, die Mikrosteuerung konfiguriert ist, um ein Signal an die Wärmebildkamera zu senden, um entweder die Wärmebildkamera auszuschalten oder zu veranlassen, dass die Wärmebildkamera in einem reduzierten Leistungszustand betrieben wird; und
wobei die Gesichtsmaskenanordnung ferner eine Anzeigeeinheit (24), die einen Sucher aufweist, der in dem inneren Bereich (16) der Gesichtsmaskenanordnung angeordnet ist, aufweist, wobei die Wärmebildkamera konfiguriert ist, um Daten an die Anzeigeeinheit zu übertragen, und die Anzeigeeinheit konfiguriert ist, um ein Bild aus den von der Wärmebildkamera (18) übertragenen Daten ein Bild zu erzeugen und anzuzeigen.

2. Eine Gesichtsmaskenanordnung (10) für ein umluftunabhängiges Atemgerät nach Anspruch 1, wobei der Beschleunigungsmesser (20) konfiguriert ist, um eine Bewegung der Gesichtsmaskenanordnung zu detektieren.

3. Eine Gesichtsmaskenanordnung (10) für ein umluftunabhängiges Atemgerät nach Anspruch 1, wobei die Mikrosteuerung (22) konfiguriert ist, um zwischen einer Bewegung der Gesichtsmaskenanordnung, die durch eine Bewegung des Benutzers erzeugt wird, und einer Bewegung, die durch ein Fahrzeug erzeugt wird, zu unterscheiden.

4. Eine Gesichtsmaskenanordnung (10) für ein umluftunabhängiges Atemgerät nach Anspruch 1, ferner wobei der Beschleunigungsmesser (20) konfiguriert ist, um die Ausrichtung der Gesichtsmaske zu detektieren.

5. Eine Gesichtsmaskenanordnung (10) für ein umluftunabhängiges Atemgerät nach Anspruch 1, wobei der Beschleunigungsmesser (20) konfiguriert ist, um zu detektieren, ob die Gesichtsmaskenanordnung in vertikaler oder horizontaler Ausrichtung ist.

6. Eine Gesichtsmaskenanordnung (10) für ein umluftunabhängiges Atemgerät nach Anspruch 1, wobei der Beschleunigungsmesser (20) und die Mikrosteuerung (22) konfiguriert sind, um einen stumpfen Krafteinfluss zu detektieren.

7. Eine Gesichtsmaskenanordnung (10) für ein umluftunabhängiges Atemgerät nach Anspruch 1, wobei der Beschleunigungsmesser (20) mindestens eines von einem piezoelektrischen und einem piezoresistiven Beschleunigungsmesser ist.

8. Eine Gesichtsmaskenanordnung (10) für ein umluftunabhängiges Atemgerät nach Anspruch 1, wobei die Gesichtsmaskenanordnung ferner mindestens einen von einem optischen Alarm, einem akustischen Alarm, einem haptischen Alarm und einem Kommunikationszubehör aufweist.

9. Eine Gesichtsmaskenanordnung (10) für ein umluftunabhängiges Atemgerät nach Anspruch 1, wobei der Beschleunigungsmesser (20) konfiguriert ist, um eine Bildstabilisierung bereitzustellen.

10. Eine Gesichtsmaskenanordnung (10) für ein umluftunabhängiges Atemgerät nach Anspruch 1, wobei die Gesichtsmaskenanordnung ferner einen Regler (8) aufweist.

11. Ein umluftunabhängiges Atemgerät (2), das die Gesichtsmaskenanordnung (10) nach Anspruch 1 aufweist, wobei das umluftunabhängige Atemgerät einen Drucklufttank oder -zylinder (4), einen ersten Druckregler (6), einen zweiten Druckregler (8) und eine Trägeranordnung (12) aufweist.

## Revendications

1. Ensemble masque facial (10) d'appareil respiratoire autonome comprenant :
a. un masque facial (14) conçu pour être porté par un utilisateur, le masque facial définissant une région intérieure (16) adjacente au visage de l'utilisateur lorsque le masque facial est enfilé par l'utilisateur ;
b. un dispositif électronique connecté au masque facial ;
c. un accéléromètre configuré pour détecter un mouvement du masque facial ;
d. un microcontrôleur couplé à l'accéléromètre et configuré pour envoyer des signaux au dispositif électronique en réponse à un mouvement détecté par l'accéléromètre ; et
e. une batterie configurée pour alimenter en puissance le dispositif électronique ;
dans lequel l'ensemble masque facial d'appareil respiratoire autonome comprend une caméra d'imagerie thermique (18) en guise de dispositif électronique, la caméra d'imagerie thermique (18) étant montée sur le côté du masque facial et comportant l'accéléromètre (20), le microcontrôleur (22) et la batterie (40) ainsi qu'un cœur de caméra d'imageur thermique (38) ;
dans lequel l'accéléromètre est configuré pour transmettre des informations sous la forme de données ou de signaux au microcontrôleur et le microcontrôleur est configuré pour interpréter lesdites informations provenant de l'accéléromètre ;
dans lequel lorsqu'un mouvement est détecté par l'accéléromètre, l'accéléromètre est configuré pour transmettre un signal, ledit signal étant soit un signal électrique soit un signal optique, au microcontrôleur et le microcontrôleur est configuré pour interpréter le signal pour ajuster sélectivement le niveau de puissance alimenté à la caméra d'imagerie thermique en réponse au mouvement capté ;
dans lequel lorsqu'aucun mouvement n'est détecté par l'accéléromètre pendant un certain laps de temps, le microcontrôleur est configuré pour envoyer un signal à la caméra d'imagerie thermique soit pour éteindre la caméra d'imagerie thermique soit pour faire fonctionner la caméra d'imagerie thermique dans un état de puissance réduite ; et
dans lequel l'ensemble masque facial comprend en outre une unité d'affichage (24) ayant un viseur agencé dans la région intérieure (16) de l'ensemble masque facial, la caméra d'imagerie thermique étant configurée pour transmettre des données à l'unité d'affichage et l'unité d'affichage étant configurée pour créer et afficher une image à partir des données transmises par la caméra d'imagerie thermique (18).

2. Ensemble masque facial (10) d'appareil respiratoire autonome selon la revendication 1, dans lequel l'accéléromètre (20) est configuré pour détecter un mouvement de l'ensemble masque facial.

3. Ensemble masque facial (10) d'appareil respiratoire autonome selon la revendication 1, dans lequel le microcontrôleur (22) est configuré pour faire la différence entre un mouvement de l'ensemble masque facial créé par un mouvement de l'utilisateur et un mouvement créé par un véhicule.

4. Ensemble masque facial (10) d'appareil respiratoire autonome selon la revendication 1, dans lequel en outre l'accéléromètre (20) est configuré pour détecter l'orientation du masque facial.

5. Ensemble masque facial (10) d'appareil respiratoire autonome selon la revendication 1, dans lequel l'accéléromètre (20) est configuré pour détecter si l'ensemble masque facial est dans une orientation verticale ou horizontale.

6. Ensemble masque facial (10) d'appareil respiratoire autonome selon la revendication 1, dans lequel l'accéléromètre (20) et le microcontrôleur (22) sont configurés pour détecter un choc violent.

7. Ensemble masque facial (10) d'appareil respiratoire autonome selon la revendication 1, dans lequel l'accéléromètre (20) est au moins l'un parmi un accéléromètre piézoélectrique et un accéléromètre piézorésistif.

8. Ensemble masque facial (10) d'appareil respiratoire autonome selon la revendication 1, dans lequel l'ensemble masque facial comprend en outre au moins l'un parmi une alerte visuelle, une alerte sonore, une alerte haptique et un accessoire de communication.

9. Ensemble masque facial (10) d'appareil respiratoire autonome selon la revendication 1, dans lequel l'accéléromètre (20) est configuré pour fournir une stabilisation d'image.

10. Ensemble masque facial (10) d'appareil respiratoire autonome selon la revendication 1, dans lequel l'ensemble masque facial comprend en outre un régulateur (8).

11. Appareil respiratoire autonome (2) comprenant l'ensemble masque facial (10) selon la revendication 1, dans lequel l'appareil respiratoire autonome comporte un réservoir ou une bouteille (4) d'air sous pression, un premier régulateur de pression (6), un second régulateur de pression (8) et un ensemble support (12).
